# EUROPEAN PATENT SPECIFICATION

(11) **EP 0 489 385 B1**
(45) Date of publication and mention of the grant of the patent: **19.03.1997**
(21) Application number: 91120666.2
(22) Date of filing: 02.12.1991
(51) Int. Cl.: H04N 7/16

(54) **System for the transmission and reception of encoded television signals**
System zur Übertragung und zum Empfangen von kodierten Fernsehsignalen
Système pour la transmission et réception de signaux de télévision codés

(30) Priority: 06.12.1990 IT 6797090
(43) Date of publication of application: 10.06.1992
(60) Divisional application: 95115764.3
(73) Proprietor: EDICO S.r.l., I-00197 Roma (IT)
(72) Inventor: Dini, Roberto, Ing., I-10098 Rivoli (TO) (IT); Farina, Attilio, Ing., I-10137 Torino (IT); Zappala', Giuseppe, Dr., I-10128 Torino (IT)

(56) References cited:
- EP-A- 0 180 460
- EP-A- 0 233 457
- EP-A- 0 317 404
- WO-A-85/03830
- US-A- 4 916 737
- ELECTRONICS & WIRELESS WORLD vol. 93, no. 1613, March 1987, SUTTON (GB) pages 263 - 265 TOM IVAL 'satellite systems'

## Description

The present invention refers to a system for transmitting and receiving encoded television signals, in which a television signal is encoded in order not to be received and reproduced in the normal way by normal television receivers, but only by receivers equipped with a suitable decoder, and in which the decoder includes a control circuit that receives periodically by telephone, a secret code, from a central computer. The secret code is necessary for the decoding operation.

It is known that distribution systems for television programs upon payment are used, in which the programs are distributed for example by cable, and in which the television signal undergoes coding during transmission, thus modifying the characteristics; in order to receive such signals in a satisfactory way, a receiver equipped with an opportune decoder is needed that restores the signal to its original characteristics, in order to permit that the visual and audio reproduction be realized in a satisfactory way.

A system of the type known is described by the U.S. patent US-A-4,916,737; it provides that a central computer be connected once a month by telephone with the decoder having an identification number and a table for decoding, to communicate a new identification number and a new table to it. As the decoding table is valid for one month, and written in EAROM, this system can be easily subject to actions of piracy, such as copying the table. This allows to avoid payment of the quote due for any number of other abusive decoders.

In the patent it is suggested that the EAROM be obtained in the same substratum of the microprocessor, in order to make copying more difficult. This means a high increase in the cost of the apparatus, because the component must practically be manufactured by order, so in a limited number, on which the cost of the tooling is a heavy burden, and is unavoidably subjected to a high incidence of rejects.

Another inconvenient of the known system is that the telephone line must be permanently connected to the decoder upstream the normal telephone apparatus, restricting the different ways of arranging the decoder and/or of such telephone set.

The international patent application WO-A-8503830 describes a method of controlling the deciphering of an enciphered signal wherein an order call from subscriber unit is sent via a telephone line and the deciphering key is sent back on that line for storage in that unit without requiring the subscriber to identify itself; the deciphering key delivered via the telephone may itself be enciphered.

The aim of the present invention is therefore to indicate a transmission and reception system for encoded television signals like the type described, not having a high cost, not being inconvenient for the user and presenting a high safety degree against the possibility of actions of piracy.

In order to achieve such aims, the object of the present invention consists of a system for the transmission and reception of the encoded television signals, characterized by the fact that said system provides that the control circuit, the memory associated to it, a telephone modem and a battery pad be contained in one card, extractable from the decoder and linkable to the telephone line and that said decoder be individualized by an identification number.

Further aims and advantages of the present invention will result clear in the following detailed description and enclosed drawings, supplied only as an explicative and non limiting example, in which:
Figure 1 schematically represents a system according to the invention;
Figure 2 represents a block diagram of a part of the system according to invention;
Figure 3 represents a variant of the represented system in Figure 1;
Figure 4 represents a further variant of the represented system in Figure 1;
Figure 5 schematically represents the logic flow of a part of the functioning of the system of Figure 1.

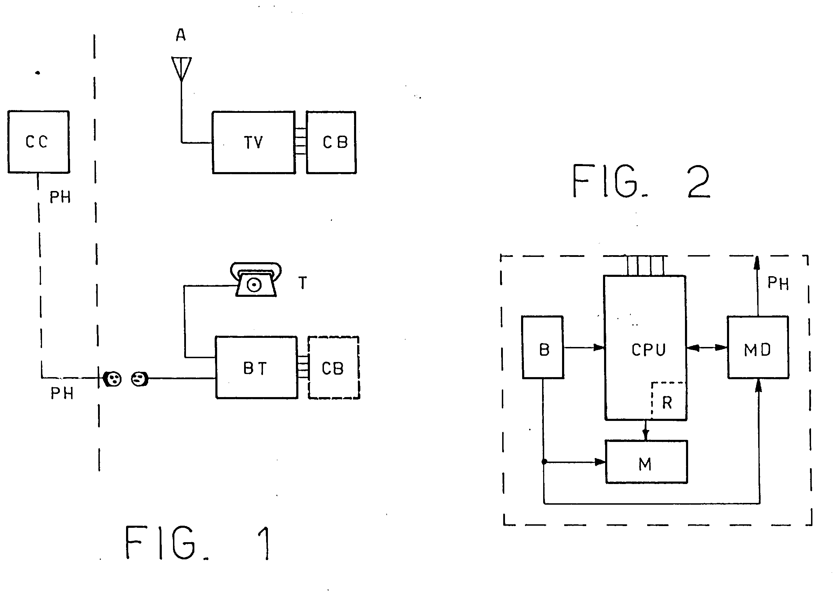

In Figure 1, that schematically represents a possible realization of the system according to the invention, reference symbol A indicates an aerial for receiving the television signal; a television signal receiver is indicated with the symbol TV; with the CB symbol, the circuital block is indicated, making part of the television receiver TV. The block CB is removable from the television receiver TV, to which it is connected by means of a certain number of known electric connectors necessary for the exchange of feeding tensions and signals. The receiver TV is mainly of a conventional type; it includes a signal tuner, amplifier signal blocks, detectors, deflection signal generators, an image visualizer apparatus (for example a classic colour picture-tube with shadow mask), a power supply section, etc..

The CB block, that is represented in more detail in Figure 2, includes an auxiliary feeding battery pad, indicated with the reference symbol B, necessary for supplying the other circuits of the block CB when it is not connected to the receiver TV or to an other circuital block provided with a power supply circuit.

The block CB also includes a circuital control block, indicated with the symbol CPU, that represents a central process unit and can contain, in one of the preferred versions of the invention, a microprocessor; said central process unit contains at least one inside register, capable of retaining, typically, a binary data of 32 bit.

The block CB also includes a non-volatile memory circuit, for example a ROM (read only memory), indicated with the reference symbol M; and a telephone modem, indicated with the reference symbol MD.

The battery B is connected to all the three other blocks (CPU, M and MD); the CPU is connected to the modem MD and to the memory M ; the modem MD is naturally linkable to the telephone line PH.

The block CB can be made, in a preferred form of realization of the invention, on a printed circuit card, extractable in the known way from the TV receiver and insertable in another block, indicated in Figure 1 with the reference symbol BT, which will be dealt with later. In Figure 1 the reference symbol CC indicates a central control computer, situated in a different location from that of the receiver TV and the circuit BT.

The central computer CC is connected to the telephone PH line.

The circuit BT is also connected to the telephone line PH; it is also connected to a normal domestic telephone set, indicated with reference symbol T; as already said, the circuit BT is linkable to the circuitry block CB.

As mentioned above, Figure 2 represents a block diagram of a part of the system according to the invention, and precisely of the circuitry block CB.

The television receiver TV can receive an encoded television signal (scrambled) in such a way that it can not be received and reproduced in a normal way by normal television receivers, but only by receivers equipped with a suitable decoder; the decoder is contained in the block, and, more precisely, is made utilizing the microprocessor (for example of the 16 bit type 8086, but with some registers at 32 bit) that represents the substantial part of the central process unit CPU.

The instructions for operating the microprocessor are contained in the memory M, with one or more conversion tables (look up tables) that are necessary for decoding the program to be received.

The reception of the encoded programs is possible by paying a fee (that can be measured by time, for example daily, weekly or monthly) or from program to program.

To carry out the decoding operation, the microprocessor must know a secret code, that is supplied only to the users up-to-date with their payments.

Said secret code can, for example, be the address of the memory M where there is the special conversion table to be utilized for the decoding of the program to be received.

The secret code, for safety reasons, is periodically changed (for example daily, in a preferred version of the invention); the central computer CC provides to call the user by phone to communicate the secret code valid up to the time of the next call.

In the version represented in Figure 1, the central computer calls the user every night, between 01,00 o'clock and 5,30 A.M.; the time of the call is not known, but it is fixed every night by the computer on the bases of the sequence of the pseudocasual numbers; in this way two goals are acheived: firstly, making it difficult to try to intercept the call, and secondly, not occupying the user's telephone line during the hours in which he may need to to use the phone.

If the user's line is occupied, the main computer recalls again twice, with a 15 minute interval one from to the other.

The user, every evening, before going to bed, provides to extract the card CB from the television receiver and insert it in the circuit BT connected to the telephone line, so the computer CC reaches the microprocessor of the CPU unit.

The circuit BT is similar to the one described in the Italian patent application n. 67032-A/86 (IT-A-1 187 057); the computer in order to be recognised by the circuit BT effects its call in a conventional way; precisely it effects only one ring and then closes; it then leaves a 5 second space of time and then recalls; considering that the dialing of the number takes about 10 seconds, the peripheral terminal will receive the second call about 15 seconds after the first.

Therefore the conversation with the circuit BT starts.

The circuit BT, that in this type of solution includes an incorporated CMOS technology made timer to be fed by the same telephone doubled wire, on its own account, starts at 1 o'clock to disconnect for 5 seconds the telephone apparatus T every time it receives a call. In such a way the telephone bell T does not function when the computer CC calls, and the user is not disturbed; if on the other hand someone calls the user during such an interval of time, between 1,00 o'clock and 5,30, it is prepared to make the telephone ring for a long time, so the loss of one or, maximum, two rings has insignificant effects.

As soon as the circuit BT detects the the computers CC call (recognizable because it stops after only one ring), it disconnects once again the phone T from the line PH and prepares itself to receive the next call from the central computer.

During the second call, the computer asks the CPU unit its identification number, recorded in the memory M and necessary to distinguish that particular CPU from the other similar peripheral units; after having verified that the identification corresponds to a user up-to-date with payments, and that such user has not yet received the new secret code, the central computer transmits the new code and, as soon as the peripheral unit has confirmed the reception, it closes the transmission; the circuit BT then reconnects the user's telephone.

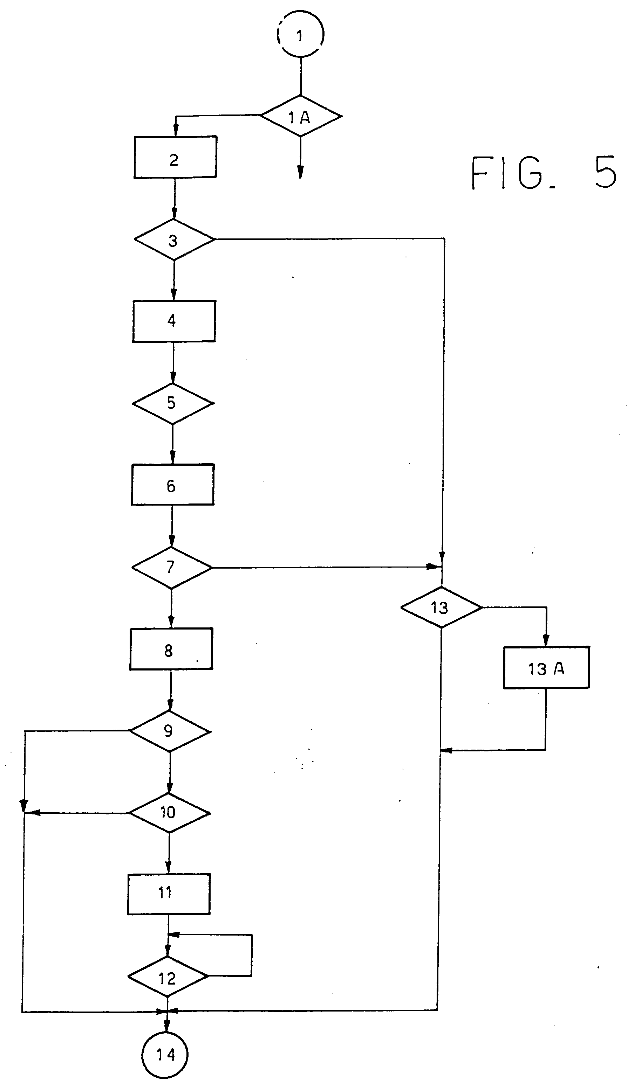

The logic flow of the call by the central computer is schematically represented in Figure 5.

Block 1 is the starting block of the calling operation to such a particular user; the checking goes on to the next block 1A.

The block 1A is a check block; it checks whether a timer has accomplished its count (that is, whether it is time to recall a user previously busy); in the affirmative case the user should be recalled.

Therefore the control operation goes on to a non represented block, as not making part of this operation; in the negative case the control goes over to block 2 (in all the check blocks the lower exit is the YES exit; the lateral exit is the NO exit).

Block 2 provides to dial the telephone number of the first user on list to which the new secret code is to be communicated.

Block 3 is a check block; it checks whether the number called is free; in the affirmative case the control passes to block 4; in the negative case the control goes over to block 13.

Block 4 provides to close the call ( to interrupt the line) after one ring; furthermore block 4 zeros the second-counter of the timer; so the control goes over to the successive block 5.

Block 5 is a check block; it checks whether 5 seconds have passed; in the affirmative case the control goes over to the successive block 6; in the negative case the control returns to block 5.

Block 6 provides to dial the number of the user again for the second call; the control therefore goes on to block 7.

Block 7 is a check block; it checks whether the number called is free; in the affirmative case the control goes over to block 8; in the negative case the control goes over to block 13.

Block 8 provides to ask the peripheral station its identification number; after receiving it, it memorizes the number and passes the control to block 9.

Block 9 is a check block; it checks whether the received number is up to date with its payments; in the affirmative case the control goes over to block 10; in the negative case the control goes to block 14.

Block 10 is a check block; it checks whether the number received hasn't yet received its secret code; in the affirmative case (code not yet received) the control goes on to block 11; in negative case (code already received) the control goes to block 14.

Block 11 provides to transmit the new secret code, and to record in its memory that the identification number has received the new code; then the control goes over to block 12.

Block 12 is a check block; it waits for the confirmation of receipt by the peripheral station; in the affirmative case (occured reception) the control goes over to block 14; in the negative case (reception not yet occured) the control goes back to block 12.

Block 13 is a check block; it checks in its memory whether the user found busy before has already received another two calls; in the affirmative case the control goes to block 14; in the negative case the control goes to block 13A.

Block 13A provides to add to the memory the number of calls made to that user and starts a timer that will count up to 15 minutes and, at expiry of that time, it raises a flag (cfr.block 1A).

Block 14 is the conventional end of operation block.

For security reasons the code is transmitted in a ciphered form so that a telephone interception not be sufficient to break the secrecy; the CPU unit provides in real time to decipher the code, by means of a memorized key in the memory M, and stores the new deciphered secret code in the interior register R.

Since the interior register R is more difficult to accede to than an external memory CPU like the memory M, the secret code is, in such a way, more protected from actions of piracy; in fact a pirate needs to intercept a telephone call (being difficult as the time of call is unknown to him) and to read the memory M in order to know the decoding key of the transmitted code.

On the other hand, the fact that the central computer transmits the code only once to each user, is meant to avoid the possibility that a pirate may obtain the code by knowing an identification number in order with payments.

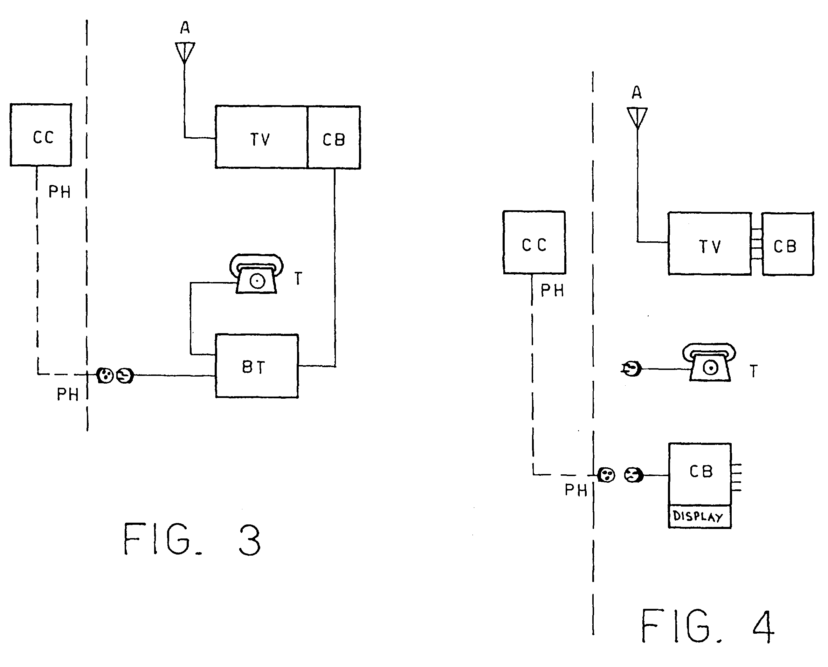

In one variation of the invention, represented in Figure 3, the circuit CB can be incorporated in the television receiver TV; in such a case even the battery B is useless; but a permanent connection is necessary between the circuit commutator BT and the circuit CB, i.e. the television receiver, to bring the telephone line to the modem incorporated within it; for the user this version is easier as he does not have to move the circuit CB between television and circuit BT, with the disadvantage that he must provide a double wire between the television and the circuit BT.

Figure 4 represents a further variation of the system represented in Figure 1; it provides that the circuit CB be equipped with a normal three-pin telephone plug and that the user detaches the telephone every night and connects in its place the circuit BT; the commutation circuit BT is in such a case useless.

This version has the drawback that the user cannot utilize the telephone at night, and therefore it may not be acceptable. An alternative is that the circuit CB, and more precisely the CPU, be able to dial the telephone number of the central computer; this way the user can move the circuit CB, connecting it to the telephone line; call the central computer, activating the call by means of a special button, in order to get the new code, and then replace the circuit CB and reconnect the telephone to the line socket.

In this last version security is decreased, due to the lack of, for the user, the uncertainty of the connection time between the central computer and the peripheral unit; so the fact that the computer transmits the code only once to each user is of vital importance.

It can be suitable that the number of the central computer be a toll free number and that the memory M, associated to said microprocessor already contains said toll free number to call the central computer and obtain the new secret code from it.

It can also be provided that said microprocessor controls a visual indicator ( display ) indicating whether for that day the new secret code has already been inserted and for how long it will be valid; in such a case the microprocessor, besides memorizing the new code, also provides to memorize the date and the expiry time.

Naturally it is advisable not to constantly change the secret code at fixed intervals.

The characteristics of the described system become clear from the description outlined and from the annexed drawings.

In the outlined description the advantages of the system object of the present invention are also clear.

In particular they are represented by the fact that the secretness of the code is protected in the best way possible.

## Claims

1. A system for the transmission and reception of encoded television signals, in which a television signal is encoded in order not to be received and reproduced in the normal way by normal television receivers, but only from receivers equipped with a suitable decoder, and in which the decoder includes a control circuit and receives, by telephone, a secret code from a central computer, the secret code being necessary for the decoding operation, characterized by the fact that said system provides that the control circuit (CPU), the memory (M) associated to it, a telephone modem (MD) and a battery feeding pad (B) be contained in a container (CB), extractable from the decoder and linkable to the telephone line (PH).

2. A system for the transmission and reception of encoded television signals, according to claim 1, characterized by the fact that said decoder is individualized by an identification number.

3. A system for the transmission and reception of encoded television signals, according to claim 2, characterized by the fact that said central computer (CC), once in contact with the control circuit (CPU) and before transmitting the new secret code, requires said identification number and checks if the holder of the decoder is up to date with his payments and whether that day the decoder individualized with that particular number has already received the new secret code.

4. A system for the transmission and reception of encoded television signals, according to claim 3, characterized by the fact that said microprocessor (CPU) is provided to be in the position to call said central computer ( CC ) to get the new secret code.

5. A system for the transmission and reception of encoded television signals, according to claim 4, characterized by the fact that in the memory (M) associated to said microprocessor (CPU) the toll free number is already contained in order to call said central computer (CC) and to obtain the new secret code.

6. A system for the transmission and reception of encoded television signals, according to claim 4, characterized by the fact that said microprocessor (CPU) controls a visual indicator (display) that indicates whether for that day, the new secret code has been already inserted and for how long it will be valid.

7. A system for the transmission and reception of encoded television signals, according to claim 6, characterized by the fact that said microprocessor (CPU), besides memorizing the new code, also provides to memorize the date and the expiry time of said code.

8. A system for the transmission and reception of encoded television signals, according to one of the previous claims from 1 to 7, characterized by the fact that said secret code is changed at non fixed intervals.

9. An apparatus for the reception of encoded television signals, according to the system of any of the previous claims.

## Patentansprüche

1. System für die Übertragung und zum Empfang codierter Fernsehsignale, in welchen ein Fernsehsignal codiert ist, um nicht auf normale Weise durch normale Fernsehempfänger empfangen und wiedergegeben zu werden, sondern nur von Empfängern, die mit einem geeigneten Decodierer ausgestattet sind, und bei welchen der Decodierer eine Steuerungsschaltung beinhaltet und über Telefon einen Sicherheitscode von einem Zentralrechner empfängt, wobei der Sicherheitscode zum Decodierungsvorgang erforderlich ist,
dadurch gekennzeichnet, daß das System ermöglicht, daß die Steuerungsschaltung (CPU), der ihr zugeordnete Speicher (M), ein Telefonmodem (MD) und eine Batterieeinspeisebasis (B) in einem Behälter (CB) aufgenommen sind, der von dem Decodierer entfernbar und an die Telefonleitung (PH) anschließbar ist.

2. System zur Übertragung und zum Empfang codierter Fernsehsignale nach Anspruch 1, dadurch gekennzeichnet, daß der Decodierer durch eine Identifikationsnummer individualisiert ist.

3. System zur Übertragung und zum Empfang codierter Fernsehsignale nach Anspruch 2, dadurch gekennzeichnet, daß der Zentralrechner (CC), sobald er in Kontakt mit der Steuerungsschaltung (CPU) ist und vor Übertragen des neuen Sicherheitscodes, die Identifikationsnummer anfordert und prüft, ob der Besitzer des Decodierers mit seinen Zahlungen auf einem aktuellen Stand ist, und ob der mit der bestimmten Nummer Individualisierte Decodierer an diesem Tag bereits den neuen Sicherheitscode empfangen hat.

4. System zur Übertragung und zum Empfang codierter Fernsehsignale nach Anspruch 3, dadurch gekennzeichnet, daß der Mikroprozessor (CPU) so ausgebildet ist, daß er in der Lage ist, den Zentralrechner (CC) anzurufen, um den neuen Sicherheitscode zu erhalten.

5. System zur Übertragung und zum Empfang codierter Fernsehsignale nach Anspruch 4, dadurch gekennzeichnet, daß in dem dem Mikroprozessor (CPU) zugeordneten Speicher (M) die gebührenfreie Rufnummer bereits enthalten ist, um den Zentralrechner (CC) anzurufen und um den neuen Sicherheitscode zu erhalten.

6. System zur Übertragung und zum Empfang codierter Fernsehsignale nach Anspruch 4, dadurch gekennzeichnet, deß der Mikroprozessor (CPU) eine visuelle Darstellung (Anzeige) steuert, die anzeigt, ob an diesem Tag der neue Sicherheitscode bereits eingefügt wurde und wie lange er gültig sein wird.

7. System zur Übertragung und zum Empfang codierter Fernsehsignale nach Anspruch 6, dadurch gekennzeichnet, daß der Mikroprozessor (CPU) neben dem Speichern des neuen Codes ebenfalls ein Speichern des Datums und der Ablaufzeit des Codes ermöglicht.

8. System zur Übertragung und zum Empfang codierter Fernsehsignale nach einem der vorstehenden Ansprüche 1 bis 7, dadurch gekennzeichnet, daß der Sicherheitscode in veränderlichen Intervallen geändert wird.

9. Vorrichtung zum Empfang codierter Fernsehsignale entsprechend dem System nach einem der vorstehenden Ansprüche.

## Revendications

1. Un système pour l'émission et la réception de signaux codés de télévision, dans lequel un signal de télévision est codé afin de pouvoir être reçu et reproduit de la façon normale non pas au moyen de récepteurs de télévision normaux, mais uniquement au moyen de récepteurs équipés d'un décodeur adéquat, et dans lequel le décodeur comprend un circuit de commande qui reçoit périodiquement, par téléphone, un code secret à partir d'un ordinateur centrale, le code secret étant nécessaire pour l'opération de décodage, caractérisé en ce que, dans ledit système, le circuit de commande (CPU), la mémoire (M) qui lui est associée, un modem pour ligne téléphonique (MD) ainsi qu'une pastille d'alimentation par pile ou batterie (B) sont contenus dans un récipient (CB) susceptible d'être extrait du décodeur et raccordé à la ligne téléphonique (PH).

2. Un système pour l'émission et la réception de signaux codés de télévision selon la revendication 1, caractérisé en ce que ledit décodeur est individualisé au moyen d'un numéro d'identification.

3. Un système pour l'émission et la réception de signaux codés de télévision selon la revendication 2, caractérisé en ce que ledit ordinateur central (C), une fois connecté au circuit de commande (CPU) et avant l'émission du nouveau code secret, exige ledit nouveau numéro d'identification pour vérifier si le détenteur du décodeur est à jour de ses paiements et si décodeur individualisé par ce numéro particulier a déjà reçu le nouveau code secret.

4. Un système pour l'émission et la réception de signaux codés de télévision selon la revendication 3, caractérisé en ce que ledit microprocesseur (CPU) est adapté pour pouvoir appeler ledit ordinateur central (C) pour obtenir le nouveau code secret.

5. Un système pour l'émission et la réception de signaux codés de télévision selon la revendication 4, caractérisé en ce que dans la mémoire (M) associée audit microprocesseur (CPU), un numéro d'appel gratuit est déjà contenu, permettant d'appeler ledit ordinateur central (C) et d'obtenir le nouveau code secret.

6. Un système pour l'émission et la réception de signaux codés de télévision selon la revendication 4, caractérisé en ce que ledit microprocesseur (CPU) commande un indicateur visuel (dispositif d'affichage) pour indiquer si, au jour concerné, le nouveau code secret a déjà été inséré et sa durée de sa validité.

7. Un système pour l'émission et la réception de signaux codés de télévision selon la revendication 6, caractérisé en ce que ledit microprocesseur (CPU), outre la mémorisation du nouveau code, assure également la mémorisation de la date et de l'heure d'expiration dudit code.

8. Un système pour l'émission et la réception de signaux codés de télévision selon l'une des revendications 1 à 7, caractérisé en ce que ledit code secret est changé à des intervalles non fixes.

9. Un appareil pour la réception de signaux codés de télévision mettant en oeuvre le système selon l'une quelconque des revendications précédentes.
